# EUROPÄISCHE PATENTANMELDUNG

(11) **EP 2 327 290 A2**
(43) Veröffentlichungstag der Anmeldung: **01.06.2011**
(21) Anmeldenummer: 10190848.1
(22) Anmeldetag: 11.11.2010
(51) Int. Cl.: A01F 12/24

(54) **Dreschkorb für ein Tangentialdreschwerk**

(30) Priorität: 30.11.2009 DE 102009047287
(71) Anmelder: Deere & Company, Moline, IL 61265-8098 (US)
(72) Erfinder: Bischoff, Lutz, 66989, Nünschweiler (DE); Meyer-Hamme, Friedrich, 31600, Uchte (DE)
(74) Vertreter: Holst, Sönke

(57) **Zusammenfassung**

Die Erfindung bezieht sich auf einen Dreschkorb (34) für ein Tangentialdreschwerk. Der Dreschkorb (34) umfasst voneinander beabstandete Wangen (62), zwischen denen sich quer zu den Wangen (62) erstreckende, um ihre Längsachse drehbare Stäbe (84) erstrecken, an deren in Gutflussrichtung stromab liegenden Seiten abstehende Elemente (86) angeordnet sind. Die Stäbe (84) sind um ihre Längsachsen zwischen einer radial innersten Stellung, in der jeweils die in Gutflussrichtung stromab liegenden Enden der Elemente (86) in radialer Richtung mit dem in Gutflussrichtung folgenden Stab (84) in einer Ebene liegen oder in radialer Richtung geringfügig über den in Gutflussrichtung folgenden Stab (84) hinausragen, jedoch nicht in den Hüllkreis der Dreschtrommel (22) eindringen, und einer geöffneten Stellung drehbar.

## Beschreibung

Die Erfindung betrifft einen Dreschkorb mit voneinander beabstandeten Wangen, zwischen denen sich quer zu den Wangen erstreckende, um ihre Längsachse drehbare Stäbe erstrecken, an deren in Gutflussrichtung stromab liegenden Seiten abstehende Elemente angeordnet sind.

### Stand der Technik

Landwirtschaftliche Mähdrescher sind große Maschinen, die landwirtschaftlich angebautes Erntegut, das Korn trägt, ernten, dreschen, trennen und reinigen. Das erhaltene saubere Korn wird in einem am Mähdrescher angeordneten Korntank gespeichert. Zum Dreschen dienen in der Regel Tangentialdrescheinrichtungen mit einem Dreschkorb und einer das Erntegut tangential fördernden Dreschtrommel oder das Erntegut axial fördernde Axialdrescheinrichtungen mit Axialdreschrotoren, die ebenfalls mit einem Dreschkorb zusammenwirken. Die Dreschkörbe setzen sich üblicherweise aus äußeren Wangen und parallel dazwischen angeordneten Bogenleisten sowie Querleisten zusammen, die zwischen sich Zwischenräume belassen, in denen sich parallel zu den Bogenleisten orientierte Korbdrähte befinden. Der Dreschkorb umgibt die Dreschtrommel über einen Teil ihres Umfangs und schließt mit ihr einen Spalt ein, durch den das zu dreschende Erntegut gezwängt wird. Während das Erntegut durch den Spalt gefördert wird, scheiden sich Erntegutteile (das Korn) ab, fallen durch die Zwischenräume und werden einer Reinigungseinrichtung zugeführt. Aufgrund der Beschaffenheit des Ernteguts lassen sich Bestandteile mehr oder weniger gut herauslösen, so dass es sinnvoll ist, die Dreschkörbe dem jeweiligen Erntegut anpassen zu können.

Es sind austauschbare Korbeinsätze beschrieben worden, die am stromab liegenden Ende des Dreschkorbs angeordnet sind und durch Einsätze mit in anderen Abständen positionierten Korbdrähten ausgetauscht werden können (EP 1 197 136 A1). Da bei vielen Mähdreschern die Dreschkörbe schwer zugänglich sind, ist ein Austausch von Korbeinsätzen jedoch mit hohem Zeitaufwand verbunden.

Weiterhin wurde in der als gattungsbildend angesehenen FR 2 621 216 A1 ein Dreschkorb vorgeschlagen, bei dem sich in alternierender Weise feste und um ihre Achse drehbare Stangen zwischen den äußeren Wangen und den parallel dazu zwischen den Wangen angeordneten Bogenleisten in Querrichtung erstrecken. Die Stangen können runden oder rechteckigen Querschnitts sein. Die drehbaren Stangen tragen an ihren in Gutflussrichtung stromab liegenden Seiten rechteckige Platten mit sich in Flussrichtung erstreckenden, rechteckigen Schlitzen. Indem die drehbaren Stangen um ihre Längsachsen gedreht werden, können die Platten zwischen einer geschlossenen Stellung, in der sie sich tangential zum Umfang der Dreschtrommel erstrecken und einer geöffneten Stellung bewegt werden, in der sie nahezu radial zur Dreschtrommel orientiert sind. In der geschlossenen Stellung ragen die festen Stangen in radialer Richtung über Platten hinaus, sind also näher an der Drehachse der Dreschtrommel als die stromab liegenden Enden der Platten. Demnach bilden sich in der Flussrichtung des Ernteguts zwischen den Platten und den festen Stangen und zwischen den festen Stangen und den drehbaren Stangen jeweils stufenartige Übergänge, die bei empfindlichen Erntegutarten zu unerwünschten Beschädigungen der Körner und zu Störungen des Erntegutflusses führen können.

Die US 4 875 891 A beschreibt einen Rost für eine Abscheidetrommel mit verstellbaren Fingerrechen. Die FR 637 181 A und die US 2 457 259 A beschreiben Dreschkörbe mit verstellbaren Fingern, die in der radial inneren Stellung in den Hüllkreis der Dreschtrommel eindringen.

### Aufgabe der Erfindung

Die der Erfindung zu Grunde liegende Aufgabe wird darin gesehen, einen Dreschkorb mit verstellbaren Elementen zu schaffen, der eine Stellung umfasst, in der eine Störung des Erntegutflusses oder Beschädigung empfindlicher Körner durch stufenartige Übergänge, an denen das Erntegut nach innen zur Drehachse der Dreschtrommel abgelenkt wird, nicht oder in vermindertem Maße zu erwarten ist.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Dreschkorb für ein Tangentialdreschwerk umfasst voneinander beabstandete Wangen, an denen sich quer zu den Wangen erstreckende Stäbe um ihre Längsachse drehbar gelagert sind. Die Stäbe umfassen an ihren in Gutflussrichtung stromab liegenden Seiten abstehende Elemente, die beispielsweise finger- oder kammförmig ausgebildet sein können. Die Stäbe mit den Elementen sind mittels eines geeigneten Antriebes synchron zwischen einer (bezüglich der Drehachse der der Dreschkorb zugeordneten Dreschtrommel) radial innersten Stellung, in der jeweils die in Gutflussrichtung stromab liegenden Enden der Elemente in radialer Richtung mit dem in Gutflussrichtung folgenden Stab in einer Ebene liegen oder in radialer Richtung über den in Gutflussrichtung folgenden Stab hinausragen, aber jeweils nicht in den Hüllkreis der Dreschtrommel eindringen, und einer geöffneten Stellung verdrehbar. Dabei können die Stäbe mit den Elementen in eine tangentiale (Zwischen-) Stellung gedreht werden, in der die Elemente jeweils in Richtung auf einen in Gutflussrichtung folgenden Stab hin orientiert sind. In der geöffneten Stellung ist ein gegenüber der tangentialen Stellung vergrößerter Spalt zwischen dem Element und dem in Gutflussrichtung folgenden Stab gebildet.

Auf diese Weise erreicht man in der radial innersten Stellung eine sehr glatte oder dachartige Anordnung der Stäbe und Elemente, die zu einem glatten Erntegutfluss ohne abrupte Richtungsänderungen führt. Da es sich bei der radial innersten Stellung (neben der geöffneten Stellung) um eine von zwei Endstellungen der drehbaren Stäbe handelt, ist sie unproblematisch ansteuerbar.

### Ausführungsbeispiel

In den Zeichnungen ist ein nachfolgend näher beschriebenes Ausführungsbeispiel der Erfindung dargestellt. Es zeigt:
- Fig. 1: eine schematische seitliche Ansicht eines Mähdreschers mit einem Tangentialdreschwerk,
- Fig. 2: eine perspektivische Ansicht des Dreschkorbs des Tangentialdreschwerks,
- Fig. 3: eine seitliche Schnittansicht der Stäbe und Elemente des Dreschkorbs in der radial innersten Stellung,
- Fig. 4: eine seitliche Schnittansicht der Stäbe und Elemente des Dreschkorbs in der tangentialen Stellung,

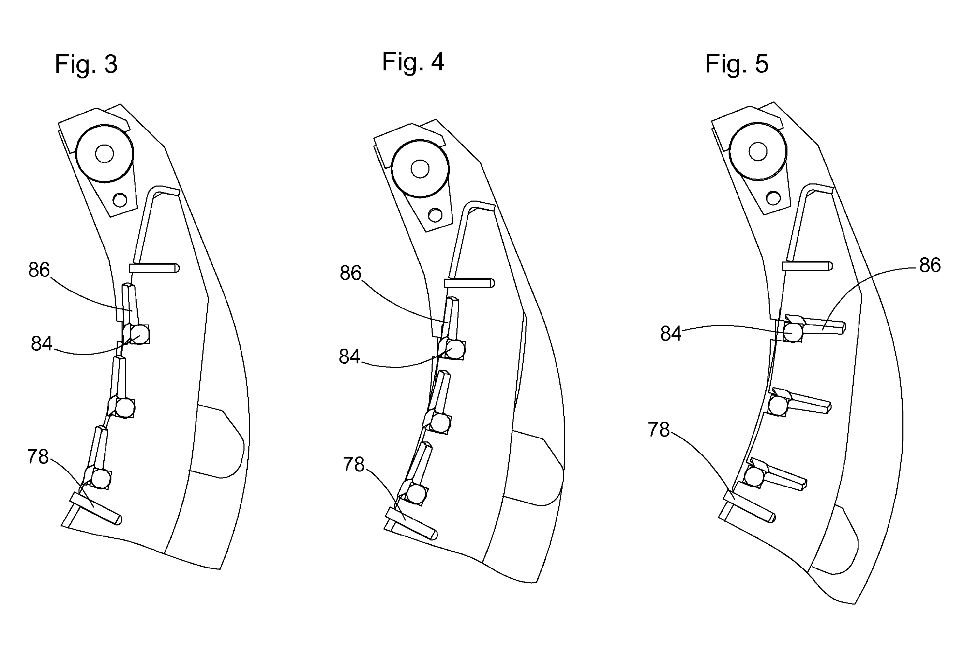

- Fig. 3: eine seitliche Schnittansicht der Stäbe und Elemente des Dreschkorbs in der geöffneten Stellung.

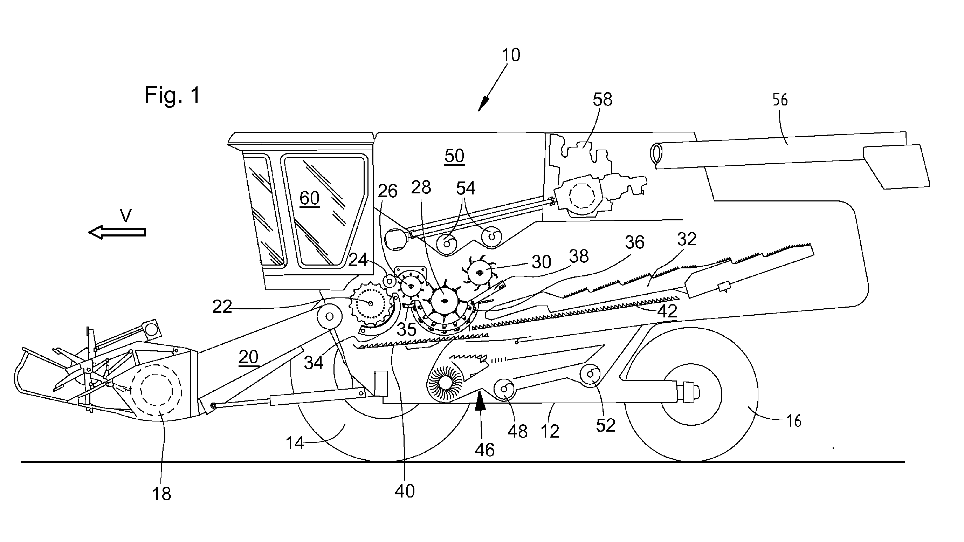

Die Figur 1 zeigt einen selbst fahrenden Mähdrescher 10 mit einem Rahmen 12, der sich über angetriebene vordere Räder 14 und lenkbare rückwärtige Räder 16 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V des Mähdreschers 10 im Erntebetrieb.

An den vorderen Endbereich des Mähdreschers 10 ist eine Erntegutbergungsvorrichtung 18 in Form eines Schneidwerks abnehmbar angeschlossen, um beim Erntebetrieb Erntegut in Form von Getreide oder andere, dreschbare Halmfrüchten von dem Feld zu ernten und es nach oben und hinten durch einen Schrägförderer 20 einem Mehrtrommeldreschwerk zuzuführen, das - in Fahrtrichtung V hintereinander angeordnet - eine Dreschtrommel 22, eine Abstreiftrommel 24, eine oberschlächtig arbeitende Fördertrommel 26, einen Tangentialseparator 28 sowie eine Wendetrommel 30 umfasst. Stromab der Wendetrommel 30 befindet sich ein Strohschüttler 32. Die Dreschtrommel 22 ist in ihrem unteren und rückwärtigen Bereich von einem Dreschkorb 34 umgeben. Unterhalb der Fördertrommel 26 ist eine mit Öffnungen versehene oder geschlossene Abdeckung 44 angeordnet, während sich oberhalb der Fördertrommel 26 eine fest stehende Abdeckung und unterhalb des Tangentialseparators 28 ein Separierkorb 36 mit verstellbaren Fingerelementen befindet. Unterhalb der Wendetrommel 30 ist ein Fingerrechen 38 angeordnet.

Das durch den Dreschkorb 34, den Separierkorb und die Strohschüttler 32 hindurchtretende, Körner und Verunreinigungen enthaltende Gemisch gelangt über Förderböden 40, 42 in eine Reinigungseinrichtung 46. Durch die Reinigungseinrichtung 46 gereinigtes Getreide wird mittels einer Körnerschnecke 48 einem nicht gezeigten Elevator zugeführt, der es in einen Korntank 50 befördert. Eine Überkehrschnecke 52 gibt unausgedroschene Ährenteile durch einen weiteren nicht gezeigten Elevator zurück in den Dreschprozess. Die Spreu kann an der Rückseite der Siebeinrichtung durch einen rotierenden Spreuverteiler ausgeworfen werden, oder sie wird durch einen stromab des Strohschüttlers 32 angeordneten Strohhäcksler (nicht eingezeichnet) ausgetragen. Das gereinigte Getreide aus dem Korntank 50 kann durch ein Entladesystem mit Querschnecken 54 und einem Entladeförderer 56 entladen werden.

Die genannten Systeme werden mittels eines Verbrennungsmotors 58 angetrieben und von einem Bediener aus einer Fahrerkabine 60 heraus kontrolliert und gesteuert. Die verschiedenen Vorrichtungen zum Dreschen, Fördern, Reinigen und Abscheiden befinden sich innerhalb des Rahmens 12. Außerhalb des Rahmens 12 befindet sich eine Außenhülle, die größtenteils aufklappbar ist. Es bleibt anzumerken, dass das hier dargestellte Mehrtrommeldreschwerk nur ein Ausführungsbeispiel ist. Es könnte auch durch eine einzige quer angeordnete Dreschtrommel und eine nachgeordnete Trenneinrichtung mit einem Strohschüttler oder einem oder mehreren Trennrotoren ersetzt werden.

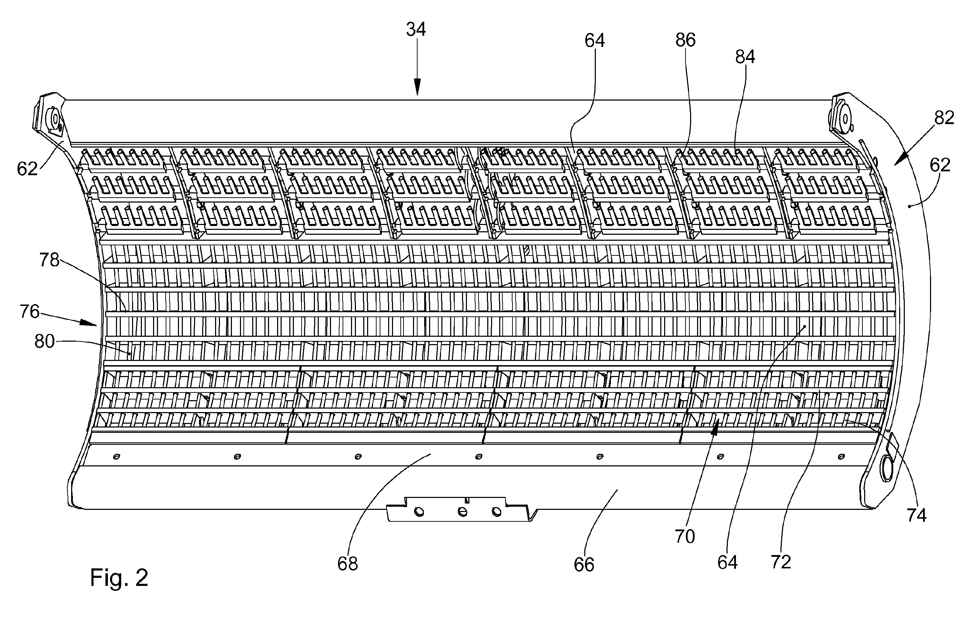

Die Figur 2 zeigt eine perspektivische Ansicht des Dreschkorbs 34. Dieser oder ein ähnlicher Dreschkorb könnte auch als Separierkorb 36 verwendet werden. Der Dreschkorb 34 umfasst seitliche Wangen 62, die parallel zueinander orientiert und voneinander beabstandet sind. Zwischen den Wangen 62 sind Bogenleisten 64 verteilt, die ebenfalls parallel zueinander und zu den Wangen 62 orientiert und voneinander beabstandet sind. Die Flussrichtung des Ernteguts ist in der Figur 2 von links unten nach rechts oben gerichtet.

Am in Gutflussrichtung vorderen Ende des Dreschkorbs 34 ist ein konkaves Einlaufblech 66 angebracht, dem ein flaches Blech 68 folgt. Stromab des Bleches 68 befindet sich ein erster Dreschabschnitt 70, der durch sich zwischen den Wangen 62 erstreckende Leisten 72 und durch die Leisten geführte Korbdrähte 74 aufgebaut ist. Dieser erste Dreschabschnitt kann aus einem oder mehreren herausnehmbare Einsatz oder Einsätze aufgebaut sein, der oder die durch andere Einsätze mit anderen Durchlassöffnungen austauschbar sein können. Stromab des zweiten Dreschabschnitts 70 befindet sich ein zweiter, fest mit den Wangen 62 verbundener Dreschabschnitt 76, der durch sich zwischen den Wangen 62 erstreckende Leisten 78 und durch die Leisten geführte Korbdrähte 80 aufgebaut ist. Die Abstände zwischen den benachbarten Leisten 78 und benachbarten Korbdrähten 80 sind im zweiten Dreschabschnitt 76 größer als die Abstände zwischen den benachbarten Leisten 72 und benachbarten Korbdrähten 74 im ersten Dreschabschnitt.

Stromab des zweiten Dreschabschnitts 76 folgt am Dreschkorb 34 ein dritter Dreschabschnitt 82, der sich aus drei unmittelbar hintereinander angeordneten Stäben 84 mit rechteckigem Querschnitt und daran angebrachten, fingerartigen Elementen 86 zusammensetzt. Die Stäbe 84 erstrecken sich zwischen den Wangen 62 und sind durch einen geeigneten Verstellantrieb (nicht gezeigt, es sei aber auf den Stand der Technik nach FR 637 181 A, US 2 457 259 A, US 4 875 891 A und FR 2 621 216 A1 verwiesen) synchron um ihre Längsachsen drehbar. Die Verstellung kann vor Ort durch einen Bediener oder über einen fremdkraftbetätigten Aktor aus der Kabine 60 erfolgen, wobei in diesem Fall der Bediener die Stellung vorgeben kann oder sie wird durch eine geeignete Steuerung selbsttätig anhand erfasster oder eingegebener Ernteguteigenschaften kontrolliert.

Die Stäbe 84 mit den Elementen 86 können zwischen einer radial innersten Stellung, wie sie in der Figur 3 gezeigt ist und in der die in Gutflussrichtung stromab liegenden Enden der Elemente 86 in radialer Richtung geringfügig über den in Gutflussrichtung folgenden Stab 84 und über die Wangen 62 hinausragen, jedoch nicht in den Hüllkreis der Dreschtrommel 22 eindringen, einer tangentialen Stellung, wie sie in der Figur 4 gezeigt ist und in der die Elemente 86 jeweils in Richtung auf den jeweils in Gutflussrichtung folgenden Stab 84 hin orientiert sind, und einer geöffneten Stellung bewegbar, wie sie in der Figur 5 gezeigt ist und in der jeweils ein gegenüber der tangentialen Stellung vergrößerter Spalt zwischen dem Element 86 und dem in Gutflussrichtung folgenden Stab 84 gebildet ist. In der radial inneren Stellung (Figur 3) findet ein sehr glatter Gutfluss statt, der bei empfindlichen Körnern vorteilhaft ist, da er für wenige Körnerschäden sorgt. Außerdem wird so bei brüchigem Dreschgut die Abscheidung reduziert und somit verhindert, dass Nichtkornbestandteile die Reinigung überlasten. In der tangentialen Stellung (Figur 4) findet an den vorlaufenden Ecken der Stäbe 84 ein relativ aggressiver Dreschvorgang statt. Die geöffnete Stellung (Figur 5) ermöglicht einen Durchtritt für relativ große Körner, z. B. Soja. Je nach Auslastung der Reinigung wird auf diese Weise bei schwer auszudreschendem und zu trennendem Dreschgut die Abscheidungsleistung erhöht. Der vorliegende Dreschkorb 34 eignet sich demnach zur Ernte unterschiedlicher Gutarten, wobei kein Ausbau zur Umstellung erforderlich ist.

## Patentansprüche

1. Dreschkorb (34) für ein Tangentialdreschwerk, mit voneinander beabstandeten Wangen (62), zwischen denen sich quer zu den Wangen (62) erstreckende, um ihre Längsachse drehbare Stäbe (84) erstrecken, an deren in Gutflussrichtung stromab liegenden Seiten abstehende Elemente (86) angeordnet sind, **dadurch gekennzeichnet, dass** die Stäbe (84) mit den Elementen (86) in eine radial innerste Stellung bringbar sind, in der jeweils die in Gutflussrichtung stromab liegenden Enden der Elemente (86) in radialer Richtung mit dem in Gutflussrichtung folgenden Stab (84) in einer Ebene liegen oder in radialer Richtung geringfügig über den in Gutflussrichtung folgenden Stab (84) hinausragen, jedoch nicht in den Hüllkreis der Dreschtrommel (22) eindringen.

2. Dreschkorb (34) nach Anspruch 1, **dadurch gekennzeichnet, dass** die Stäbe (84) mit den Elementen (86) aus der radial innersten Stellung über eine tangentiale Stellung, in der die Elemente (86) jeweils in Richtung auf einen in Gutflussrichtung folgenden Stab hin orientiert sind, in eine geöffnete Stellung drehbar sind, in der jeweils ein gegenüber der tangentialen Stellung vergrößerter Spalt zwischen dem Element (86) und dem in Gutflussrichtung folgenden Stab (84) gebildet ist.

3. Dreschkorb (34) nach Anspruch 1 oder 2, **dadurch gekennzeichnet, dass** die Elemente (86) fingerförmig sind.

4. Dreschkorb (34) nach einem der Ansprüche 1 bis 3, **dadurch gekennzeichnet, dass** die Stäbe (84) eine rechtwinklige vorlaufende Ecke aufweisen.

5. Dreschkorb (34) nach einem der Ansprüche 1 bis 4, **dadurch gekennzeichnet, dass** mehrere drehbare Stäbe (84) mit den Elementen (86) in Längsrichtung der Wangen (62) direkt aufeinander folgen.

6. Dreschkorb (34) nach einem der Ansprüche 1 bis 5, **dadurch gekennzeichnet, dass** die drehbaren Stäbe (84) mit den Elementen (86) in einem stromab liegenden Dreschabschnitt (82) des Dreschkorbs (34) angeordnet sind, und dass ein oder mehrere andere Dreschabschnitte (70, 76) stromauf der Stäbe (84) und Elemente (86) vorgesehen sind.

7. Tangentialdreschwerk mit einer Dreschtrommel (22) und einer Dreschkorb (34) nach einem der vorhergehenden Ansprüche.

8. Mähdrescher (10) mit einem Tangentialdreschwerk nach Anspruch 7.
